# EUROPÄISCHE PATENTSCHRIFT

(11) **EP 3 025 908 B1**
(45) Veröffentlichungstag und Bekanntmachung des Hinweises auf die Patenterteilung: **05.08.2020**
(21) Anmeldenummer: 15192940.3
(22) Anmeldetag: 04.11.2015
(51) Int. Cl.: B60Q 1/32, B60R 25/20, E05F 15/73

(54) **VORRICHTUNG MIT AUSSENBEWEGUNGSSENSOR UND LEUCHTMARKIERUNG FÜR EIN KRAFTFAHRZEUG**
DEVICE WITH EXTERNAL MOVEMENT SENSOR AND ILLUMINATED MARKING FOR A MOTOR VEHICLE
DISPOSITIF COMPRENANT UN CAPTEUR DE MOUVEMENT EXTERIEUR ET BALISE LUMINEUSE POUR UN VEHICULE AUTOMOBILE

(30) Priorität: 06.11.2014 DE 102014116171
(43) Veröffentlichungstag der Anmeldung: 01.06.2016
(73) Patentinhaber: Valeo Schalter und Sensoren GmbH, 74321 Bietigheim-Bissingen (DE)
(72) Erfinder: Simon, Jan, 74321 Bietigheim-Bissingen (DE)
(74) Vertreter: Withopf, Kristina

(56) Entgegenhaltungen:
- EP-A1- 1 902 912
- EP-A2- 2 789 504
- WO-A1-2013/037465
- WO-A1-2014/114439
- WO-A1-2015/148611
- DE-A1- 10 248 650
- DE-A1-102011 075 758
- DE-U1-202014 101 755

## Beschreibung

Die Erfindung betrifft eine Vorrichtung für ein Kraftfahrzeug mit einer Sensoreinrichtung zum Detektieren eines Objekts, insbesondere eines Körperteils, in einem Erfassungsbereich außerhalb des Kraftfahrzeugs und mit einer Leuchteinrichtung zum Markieren des Erfassungsbereichs. Zu der Erfindung gehören auch eine Fahrzeugleuchte und ein Kraftfahrzeug.

Eine Vorrichtung der genannten Art ist beispielsweise aus der EP 1 902 912 A1 bekannt. Danach weist die Vorrichtung eine Sensoreinrichtung auf, welche auf die Anwesenheit eines Körperteils eines Benutzers oder eines Gegenstands in einem Außenbereich eines Kraftfahrzeugs überwacht und bei Erkennen einer Körperbewegung eines Beins oder Fußes neben dem Kraftfahrzeug die Heckklappe oder Kofferraumklappe des Kraftfahrzeugs öffnet. Es kann ein Kennzeichnungsmittel vorgesehen sein, das zum Beispiel auf dem Erdboden einen Lichtpunkt erzeugt.

Aus der WO 2013/037465 A1 ist ein Bewegungsdetektor für ein Kraftfahrzeug bekannt, der moduliertes Licht auf eine Bodenfläche in einer Umgebung des Kraftfahrzeugs abstrahlt. Es werden zwei unterschiedliche Bereiche auf der Bodenfläche beleuchtet. Stört ein Benutzer mit seinem Fuß einen der Leuchtbereiche, so wird dies als Bewegung erkannt und eine Heckklappe des Kraftfahrzeugs geöffnet.

Bei den aus dem Stand der Technik bekannten optischen Heckklappenöffnern wurde als Nachteil erkannt, dass bei einer Verschmutzung der Leuchteinrichtung, welche die Leuchtmarkierung auf die Bodenfläche projizieren soll, diese Leuchtmarkierung nicht mehr vom Benutzer erkennbar ist. Dann weiß der Benutzer nicht, wo er mit seinem Fuß eine Schwenkbewegung ausführen muss, um das Öffnen der Heckklappe auszulösen.

Der Erfindung liegt die Aufgabe zugrunde, bei einem Kraftfahrzeug mit fahrzeugexternem Erfassungsbereich zum Detektieren einer Anwesenheit eines Objekts, insbesondere eines Körperteils, den Erfassungsbereich für die Benutzer zuverlässig zu markieren.

Die Aufgabe wird durch die Gegenstände der unabhängigen Patentansprüche gelöst. Vorteilhafte Weiterbildungen der Erfindung sind durch die Merkmale der abhängigen Patentansprüche gegeben.

Erfindungsgemäß ist eine Vorrichtung für ein Kraftfahrzeug bereitgestellt, welche eine Sensoreinrichtung und eine Leuchteinrichtung aufweist. Die Sensoreinrichtung weist ein Sensorgehäuse oder kurz Gehäuse auf, das in einer vorbestimmten ersten Einbaulage an einem ersten Bauteil des Kraftfahrzeugs befestigbar oder anordenbar ausgestaltet ist. Hierzu kann das Gehäuse z.B. einen Flansch zum Anschrauben oder eine Klebefläche zum Ankleben an das erste Bauteil aufweisen. In dem Gehäuse ist zumindest ein Sensorelement angeordnet, das in der bestimmungsgemäßen ersten Einbaulage des Gehäuses einen sich zu einer Bodenfläche einer Umgebung des Kraftfahrzeugs, insbesondere zu einer Straße, hin erstreckenden Erfassungsbereich aufweist und dazu ausgelegt ist, ein von einer Anwesenheit eines Objekts, insbesondere eines Körperteils eines Benutzers, in dem Erfassungsbereich abhängiges Sensorsignal zu erzeugen. Mit anderen Worten weist der Erfassungsbereich des zumindest einen Sensorelements nach unten, wenn das Gehäuse bestimmungsgemäß in der ersten Einbaulage in dem Kraftfahrzeug angeordnet ist. Es kann hierbei vorgesehen sein, dass die Gegenwart des Objekts und/oder eine Bewegung des Objekts signalisiert wird.

Die Leuchteinrichtung ist dazu ausgelegt, durch Abstrahlen von Licht in einem von dem Erfassungsbereich erfassten Bereich der Bodenfläche, einen Lichtfleck oder eine Leuchtmarkierung zu erzeugen. Insbesondere ist die Leuchtmarkierung kleiner als der Bereich auf der Bodenfläche, der von dem Erfassungsbereich des zumindest einen Sensorelements erfasst oder abgedeckt ist. Mit anderen Worten durchdringt dann zumindest ein Lichtstrahl des Lichts den Erfassungsbereich. Die Leuchteinrichtung kann in den Erfassungsbereich hineinleuchten.

Erfindungsgemäß ist die Leuchteinrichtung außerhalb des Gehäuses der Sensoreinrichtung angeordnet. Mit anderen Worten sind das Gehäuse und die Leuchteinrichtung vor dem Einbau in das Kraftfahrzeug als zwei Einzelbauteile bereitgestellt, die unabhängig voneinander in dem Kraftfahrzeug positioniert oder angeordnet werden können. Insbesondere ist die Leuchteinrichtung in einem von dem ersten Bauteil, an welchem das Gehäuse angeordnet ist, verschiedenen zweiten Bauteil des Kraftfahrzeugs anordenbar ausgestaltet. Alternativ dazu kann die Leuchteinrichtung in einem Bereich des zweiten Bauteils, also an dem zweiten Bauteil angeordnet sein.

In einem zweiten Aspekt sieht die Erfindung ein Kraftfahrzeug vor, in welchem eine Ausführungsform der erfindungsgemäßen Vorrichtung bereitgestellt ist.

Bei der erfindungsgemäßen Vorrichtung und dem erfindungsgemäßen Kraftfahrzeug ergibt sich der Vorteil, dass die Leuchteinrichtung unabhängig von der Sensoreinrichtung in oder an einem zweiten Bauteil des Kraftfahrzeugs angeordnet werden kann. Hierdurch ist es in vorteilhafter Weise möglich, die Sensoreinrichtung an einem ersten Bauteil anzubringen, von wo aus die Sensierung der Anwesenheit des Objekts besonders zuverlässig durchgeführt werden kann, beispielsweise nahe an der Bodenfläche. Insbesondere ist hierzu die Sensoreinrichtung bei dem erfindungsgemäßen Kraftfahrzeug in einem Abstand von höchstens 80 cm, insbesondere höchstens 60 cm, von der Bodenfläche entfernt angeordnet. Unabhängig davon kann die Leuchteinrichtung an oder in dem zweiten Bauteil angeordnet sein, dass derart gewählt werden kann, dass es sich um ein Bauteil handelt, das mit einer geringeren Wahrscheinlichkeit verschmutzt bzw. verdeckt wird, als das erste Bauteil. Hierdurch ist gewährleistet, dass der Lichtaustritt aus der Leuchteinrichtung hin zu der Bodenfläche nicht von an dem zweiten Bauteil haftendem Schmutz beeinträchtigt wird.

In einer Ausführungsform der Erfindung ist die Leuchteinrichtung in einer zweiten Einbaulage in dem Kraftfahrzeug anordenbar ausgestaltet, wobei die zweite Einbaulage entlang einer Fahrzeughochachse des Kraftfahrzeugs höher angeordnet als die die erste bestimmungsgemäße Einbaulage des Gehäuses. Mit anderen Worten ist die Leuchteinrichtung bevorzugt oberhalb der Sensoreinrichtung in dem erfindungsgemäßen Kraftfahrzeug angeordnet, wobei oberhalb auch schräg oberhalb umfasst. Insbesondere ist also das erste Bauteil näher an der Bodenfläche angeordnet als das zweite Bauteil. Bevorzugt beträgt eine Einbauhöhe der Leuchteinrichtung mindestens 60 cm, insbesondere mindestens 80 cm. Hierdurch ergibt sich der Vorteil, dass die Leuchteinrichtung mit einer geringeren Wahrscheinlichkeit von beispielsweise bei einer Fahrt aufgeworfenem Material, beispielsweise Schmutz, Staub, Schnee und/oder Matsch, verdeckt wird.

In einer Ausführungsform ist das Gehäuse an einem Stoßfänger oder einem Trittbrett oder einer Heckklappe befestigbar ausgestaltet. Durch Anordnen der Sensoreinrichtung an dem Stoßfänger oder Trittbrett ergibt sich der Vorteil, dass sich die Sensoreinrichtung in einem Abstand von höchstens 80 cm, insbesondere höchstens 60 cm von der Bodenfläche entfernt befindet. Hierdurch ist die Detektion des Objekts besonders zuverlässig. Das Anordnen an der Heckklappe weist den Vorteil auf, dass beispielsweise eine Rückfahrkamera als Sensorelement genutzt werden kann. Das Vorsehen der Sensoreinrichtung im Trittbrett weist den Vorteil auf, dass eine Bewegungserkennung im Bereich einer Fahrertür oder einer anderen Fahrzeugtür ermöglicht ist.

In einer Ausführungsform der Erfindung weist das zumindest eine Sensorelement der Sensoreinrichtung jeweils einen optischen Empfänger, insbesondere einen lichtempfindlichen Sensor, oder eine Kamera oder einen Ultraschallsensor auf. Ein optischer Empfänger ist mit besonders geringem technischem Aufwand bereitstellbar. Eine Kamera kann vorteilsbringend einer doppelten Funktion zugeführt werden. Beispielsweise kann eine Rückfahrkamera genutzt, die während einer Rückwärtsfahrt des Kraftfahrzeugs zum Einsehen des Heckbereichs vom Fahrer genutzt werden kann. Die Kamera kann insbesondere in der beschriebenen Weise in einer Heckklappe des Kraftfahrzeugs angeordnet sein. Ein Ultraschallsensor weist den Vorteil auf, dass eine Detektion eines Objekts im Erfassungsbereich auch beim verschmutzten ersten Bauteil durch eine Schmutzschicht hindurch möglich ist.

In einer Ausführungsform der Erfindung ist die Leuchteinrichtung mit einem Helligkeitssensor gekoppelt, der ein mit einer Umgebungshelligkeit korrelierendes Helligkeitssignal zu erzeugen ausgelegt ist. Ein solcher Helligkeitssensor kann in einem Kraftfahrzeug beispielsweise auch zum Umschalten zwischen Tagfahrlicht und Abblendlicht bereitgestellt sein. Der Helligkeitssensor kann auch beispielsweise mittels einer Kamera des Kraftfahrzeugs realisiert sein. Die Leuchteinrichtung ist bei dieser Ausführungsform dazu ausgelegt, in Abhängigkeit von dem Helligkeitssignal des Helligkeitssensors, eine Strahlungsintensität des zum Erzeugen der Leuchtmarkierung abgestrahlten Lichts einzustellen. Hierdurch ergibt sich der Vorteil, dass abhängig vom Umgebungslicht eine vom Benutzer durch einen vorbestimmten Mindestkontrast erkennbare Leuchtmarkierung auf der Bodenfläche erzeugt werden kann.

In einer Ausführungsform der Erfindung ist die Sensoreinrichtung mit einer Schließanlage des Kraftfahrzeugs koppelbar ausgestaltet und eine Steuereinrichtung der Sensoreinrichtung ist dazu ausgelegt, in Abhängigkeit von dem Sensorsignal des zumindest einen Sensorelements durch Aussenden eines Steuersignals an die Schließanlage eine Klappe des Kraftfahrzeugs, insbesondere eine Heckklappe zu entriegeln und/oder zu öffnen. Zum Öffnen der Heckklappe kann ein entsprechender Aktor bzw. Motor vorgesehen sein. Hierdurch kann in vorteilsbringender Weise der bereits beschriebene optische Heckklappenöffner bereitgestellt werden. Es kann aber auch beispielsweise eine Fahrertür aufgeschwenkt werden, damit ein beispielsweise mit Einkaufstüten beladener Fahrer die Tür nicht manuell öffnen muss. Zum Ankoppeln der Sensoreinrichtung an die Schließanlage kann z.B. eine elektrische Schnittstelle, insbesondere ein Stecker oder eine Buchse oder ein Busankoppler, bereitgestellt sein.

In einer Ausführungsform ist die Leuchteinrichtung dazu ausgelegt, die Leuchtmarkierung nur bei still stehendem und/oder abgeschaltetem und/oder verriegeltem Kraftfahrzeug und/oder aktivierter Sensoreinrichtung zu erzeugen. Hierdurch ergibt sich der Vorteil, dass die Leuchtmarkierung im Betrieb des Kraftfahrzeugs niemanden unnötig verwirrt oder irritiert.

In einer Ausführungsform sind die Leuchteinrichtung und die Sensoreinrichtung mit einem Funkschlüsselempfänger des Kraftfahrzeugs koppelbar ausgestaltet. Die Vorrichtung ist hierbei dazu ausgelegt, in Abhängigkeit von einem Funksignal eines Funkschlüssels die Sensoreinrichtung und die Leuchteinrichtung von einem Aus-Zustand in einen Aktivzustand zu schalten, in welchem die Sensoreinrichtung das Detektieren durchführt und die Leuchteinrichtung die Leuchtmarkierung erzeugt. Hierdurch ergibt sich der Vorteil, dass nur eine zum Zutritt befugte Person, welche den Funkschlüssel bei sich trägt, mittels der Sensoreinrichtung das Kraftfahrzeug steuern kann. Die Kopplung mit dem Funkschlüsselempfänger kann technisch in derselben Weise ausgeführt sein, wie es bereits im Zusammenhang mit der Kopplung an die Schließanlage beschrieben worden ist.

In einer Ausführungsform ist die Leuchteinrichtung in oder an einer Fahrzeugleuchte, insbesondere einer Heckleuchte, anordenbar ausgestaltet. Bevorzugt ist die Leuchteinrichtung in eine Fahrzeugleuchte integriert, d.h. die Fahrzeugleuchte ist Bestandteil dieser Ausführungsform der erfindungsgemäßen Vorrichtung. Hierdurch ergibt sich der Vorteil, dass die Leuchteinrichtung in einem Bauteil angeordnet ist, das bei bestimmungsgemäßen Betrieb des Kraftfahrzeugs im Wesentlichen frei von Verschmutzung ist. Die Fahrzeugleuchte kann auch ein Seitenblinker sein. Hierdurch ergibt sich der Vorteil, dass eine Bewegungserkennung für eine Fahrertür oder eine andere Fahrzeugtür ermöglicht ist.

Im Zusammenhang mit der Integration der Leuchteinrichtung in eine Fahrzeugleuchte ergeben sich mehrere vorteilhafte Weiterbildungen, die im Folgenden beschrieben sind.

In einer Weiterbildung ist die Leuchteinrichtung dazu ausgelegt, zum Erzeugen des Lichts zumindest eine Leuchtdiode und/oder zumindest einen Laser der Fahrzeugleuchte zu aktivieren. Bei der Leuchtdiode und/oder dem Laser handelt es sich dabei jeweils um eine Lichtquelle zum Erzeugen eines Abblendlichts, eines Fernlichts, eines Bremslichts, eines Rückfahrlichts, eines Hecklichts, eines Fahrtrichtungsanzeigelichts, das heißt eines Blinklichts, eines Nebelleuchtenlichts und/oder eines Tagfahrlichts. Mit anderen Worten wird bei dieser Weiterbildung zum Erzeugen der Leuchtmarkierung eine Lichtquelle genutzt, die insbesondere im Fahrbetrieb des Kraftfahrzeugs zum Erzeugen eines Lichtscheins für eine weitere Beleuchtungsfunktionalität der Fahrzeugleuchte bereitgestellt ist. Hierdurch ergibt sich der Vorteil, dass beim Erzeugen der Leuchtmarkierung eine eigens nur dafür bereitgestellte dedizierte Lichtquelle bereitgestellt sein muss.

In einer Weiterbildung weist die Leuchteinrichtung ein optisches Element zum optischen Bündeln und/oder zum optischen Umlenken des zum Erzeugen der Leuchtmarkierung vorgesehenen Lichts vor dessen Austritt in die Umgebung auf. Hierdurch ergibt sich der Vorteil, dass man beim Bereitstellen der Leuchteinrichtung nicht darauf angewiesen ist, die Lichtquelle der Leuchteinrichtung zur Bodenfläche hin weist. Dadurch kann die Lichtquelle der Leuchteinrichtung mit besonders geringem technischem Aufwand in eine Fahrzeugleuchte integriert sein.

Das optische Element ist insbesondere zum Abzweigen des Lichts aus einem Strahlengang der Fahrzeugleuchte ausgelegt. Hierdurch ergibt sich der Vorteil, dass mittels des Leuchtelements das Licht aus nicht mit einer dedizierten, nur für das Erzeugen der Leuchtmarkierung vorgesehenen Lichtquelle, sondern mit einer anderen Lichtquelle der Fahrzeugleuchte erzeugt werden kann und dieses Licht bedarfsweise mittels des optischen Elements aus dem Strahlengang der Fahrzeugleuchte abgezweigt werden kann. Der Strahlengang ist derjenige Raumbereich in der Fahrzeugleuchte, welcher das Licht insbesondere im Fahrbetrieb des Kraftfahrzeugs, zu einem Lichtschein für ein Funktionslicht zusammenfasst, also eines der bereits beschriebenen Leuchtfunktionen, von denen hier nur beispielhaft das Hecklicht und das Bremslicht und die Beleuchtung für den Rückwärtsgang noch einmal wiederholend angegeben sind.

In einer Ausführungsform ist das optische Element zwischen einem Umlenkzustand, in welchem das optische Element das Lichts zum Erzeugen der Leuchtmarkierung von einer Lichtquelle der Fahrzeugleuchte empfängt und in dem Bereich zum Erzeugen der Leuchtmarkierung umlenkt, und einen Neutralzustand, in welchem das optische Element das Licht der Lichtquelle passieren lässt, umschaltbar ausgestaltet. Das optische Element kann hierzu beispielsweise einen verschwenkbaren Spiegel oder ein bewegbar gelagertes Prisma aufweisen. Hierdurch ergibt sich der Vorteil, dass wieder eine Lichtquelle der Fahrzeugleuchte genutzt werden kann, die nicht ausschließlich zum Erzeugen der Leuchtmarkierung bereitgestellt ist, und im Neutralzustand, insbesondere während eines Fahrbetriebs des Kraftfahrzeugs, der Strahlengang zum Erzeugen eines beschriebenen Funktionslicht nicht beeinträchtigt ist.

Um die beschriebenen Weiterbildungen zu realisieren, weist das optische Element insbesondere einen Lichtleiter und/oder eine Blende und/oder ein Prisma und/oder einen bewegbar gelagerten Spiegel auf. Ein Lichtleiter ist beispielsweise mittels eines Spritzgussverfahrens in eine Streuscheibe der Fahrzeugleuchte integriert. Mittels einer Blende, insbesondere einer verstellbaren Blende, kann ein Durchmesser der Leuchtmarkierung gezielt eingestellt werden. Ein Prisma ermöglicht das Umlenken von Licht aus einem Strahlengang der Fahrzeugleuchte. Der bewegbare Spiegel kann in der bereits beschriebenen Weise vorteilsbringend eingesetzt werden.

Wie vorstehend ausgeführt, kann die Leuchteinrichtung in eine Fahrzeugleuchte des Kraftfahrzeugs integriert sein. Entsprechend ergibt sich als ein weiterer Aspekt der Erfindung eine Fahrzeugleuchte, insbesondere eine Heckleuchte, für ein Kraftfahrzeug. Die erfindungsgemäße Fahrzeugleuchte weist eine Leuchteinrichtung, die dazu ausgelegt ist, bei einer vorbestimmten Einbaulage der Fahrzeugleuchte in dem Kraftfahrzeug, also einer bestimmungsgemäßen Einbaulage, auf einer sich horizontal erstreckenden Bodenfläche einer Umgebung der Fahrzeugleuchte also dem Fahruntergrund, das heißt der Straße, durch Abstrahlen von Licht eine Leuchtmarkierung zu erzeugen, die einen Leuchtkernbereich und einen den Leuchtkernbereich umgebenen, insbesondere umschließenden Leuchtrandbereich aufweist und bei der ein Durchmesser des Leuchtkernbereichs kleiner als ein Meter, insbesondere kleiner als 50 cm, bevorzugt kleiner als 25 cm, ist und bei der eine Helligkeit der Leuchtmarkierung in dem Leuchtkernbereich zumindest dreimal, insbesondere mindestens fünfmal, bevorzugt mindestens zehnmal, größer ist als in dem Leuchtrandbereich. Die Angabe beziehen sich insbesondere auf eine Einbaulage der Leuchteinrichtung, die in einem Entfernungsbereich von 60 cm bis 150 cm über der Bodenfläche liegt. Die Helligkeit kann beispielsweise mittels eines Helligkeitssensors und/oder als Leuchtintensität auf der Bodenfläche gemessen sein. Die erfindungsgemäße Fahrzeugleuchte kann in Kombination mit einer Sensoreinrichtung vorteilsbringend dazu genutzt werden, ein erfindungsgemäßes Kraftfahrzeug bereit zu stellen.

Zu der Fahrzeugleuchte ergeben sich vorteilhafte Weiterbildungen, die durch entsprechende zusätzliche Merkmale der Leuchteinrichtung gegeben sind, wie sie bereits im Zusammenhang mit dem erfindungsgemäßen Kraftfahrzeug bereits beschrieben worden sind. Aus diesem Grund sind entsprechende Weiterbildungen der erfindungsgemäßen Fahrzeugleuchte hier nicht noch einmal beschrieben. Sie sind dennoch als Bestandteil der Erfindung zu betrachten.

Schließlich sieht die Erfindung auch ein Kraftfahrzeug vor, in welchem eine Ausführungsform der erfindungsgemäßen Fahrzeugleuchte bereitgestellt ist.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweiligen angegebenen Kombination, sondern auch in anderen Kombinationen oder aber in Alleinstellung verwendbar.

Im Folgenden ist ein Ausführungsbeispiel der Erfindung beschrieben. Dabei zeigen:
- Fig. 1: eine schematische Darstellung einer Rückansicht einer Ausführungsform des erfindungsgemäßen Kraftfahrzeugs; und
- Fig. 2: eine schematische Darstellung eines Längsschnitts des Kraftfahrzeugs von Fig. 1.

In den Figuren sind funktionsgleiche Elemente jeweils mit denselben Bezugszeichen versehen.

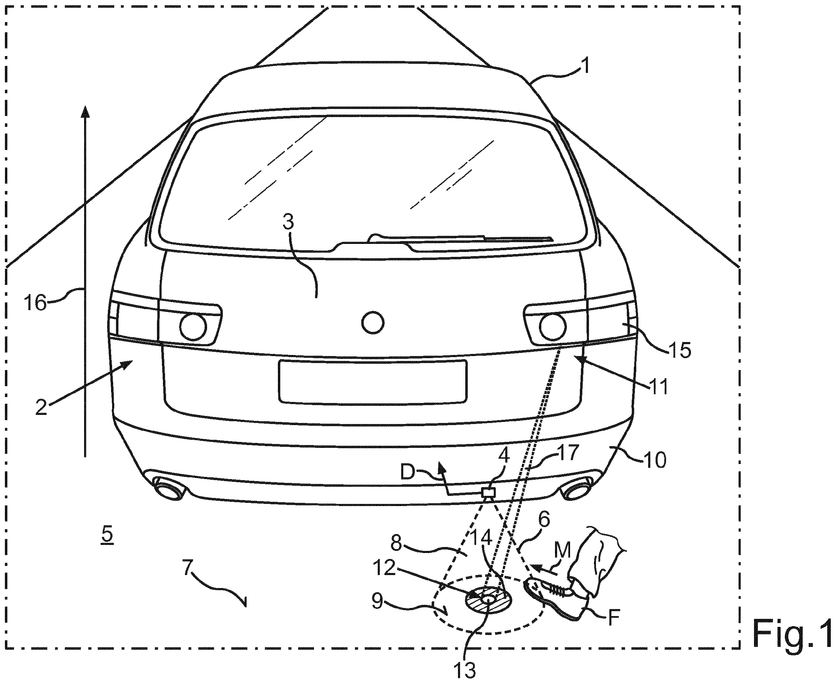

Fig. 1 zeigt ein Kraftfahrzeug 1, bei dem es sich beispielsweise um einen Kraftwagen, insbesondere einem Personenkraftwagen, handeln kann. Dargestellt ist ein Heck 2 des Kraftfahrzeugs 1. Das Heck 2 kann eine Klappe 3, insbesondere eine Heckklappe bzw. einen Kofferraumdeckel aufweisen. Die folgenden Erläuterungen können aber zusätzlich oder alternativ zur Klappe 3 am Heck 2 auch auf eine andere Klappe des Kraftfahrzeugs 1, beispielsweise eine Fahrzeugtür oder die Motorhaube, bezogen werden.

Im Kraftfahrzeug 1 kann ein Benutzer die Klappe 3 berührungslos öffnen, indem er beispielsweise mit einem Fuß F eine Schwenkbewegung M am Heck 2 ausführt. Durch das Kraftfahrzeug 1 wird die Schwenkbewegung M erkannt und bei Erkennen der Schwenkbewegung die Klappe 3 beispielsweise motorisch geöffnet.

Diese Erkennung einer Anwesenheit des Fußes F kann durch eine Sensoreinrichtung 4 bereitgestellt sein, die dazu ausgelegt sein kann, den Fuß F des Benutzers und/oder die Schwenkbewegung M des Fußes F außerhalb des Kraftfahrzeugs 1 in einer Umgebung 5 zu erkennen. Die Sensoreinrichtung 4 kann hierzu einen Erfassungsbereich 6 zum Erfassen einer Anwesenheit des Fußes F aufweisen. Der Erfassungsbereich 6 kann hierzu ausgehend von der Sensoreinrichtung 4 auf eine Bodenfläche 7, beispielsweise eine Straße, gerichtet sein. Hierdurch ist von dem Erfassungsbereich 6 ein Zwischenraum 8 zwischen der Sensoreinrichtung 4 und einem von dem Erfassungsbereich 6 erfassten Teil 9 der Bodenfläche 7 abgegrenzt, der geeignet ist, dass der Benutzer seinen Fuß F hinein hält und hierdurch in der Sensoreinrichtung 4 ein Auslöse- oder Sensorsignal D erzeugt. Dieses Sensorsignal D kann zum Steuern beispielsweise der motorisierten Heckklappe 3 in an sich bekannter Weise genutzt werden.

Damit der Benutzer erkennt, wohin er seinen Fuß F halten muss, beziehungsweise durch welchen Bereich er seinen Fuß F hindurch schwenken muss, wird eine Markierung für den Benutzer bereitgestellt. Hierzu kann bei dem Kraftwagen 1 eine

Leuchteinrichtung 11 bereitgestellt werden. Durch die Leuchteinrichtung 11 kann in dem Teil 9 der Bodenfläche 7, der von dem Erfassungsbereich 6 erfasst ist, eine Leuchtmarkierung 12 erzeugen, das heißt einen visuell wahrnehmbaren Leuchtfleck. Die Leuchtmarkierung 12 kann einen Leuchtkernbereich 13 aufweisen, dessen Helligkeit im Verhältnis zu einem den Leuchtkernbereich 13 umgebenden, insbesondere umschließenden, Leuchtrandbereich 14 derart groß ist, dass sich ein vorbestimmter Mindestkontrast des Leuchtkernbereichs 13 im Verhältnis zum Leuchtrandbereich 14 ergibt. Hierdurch kann der Benutzer den Leuchtkernbereich 13 zuverlässig visuell erkennen oder wahrnehmen.

Bei dem Kraftfahrzeug 1 funktioniert diese Markierung besonders zuverlässig, auch wenn das Kraftfahrzeug 1 verdreckt bzw. verschmutzt ist, weil es beispielsweise durch Schnee oder Matsch gefahren wurde.

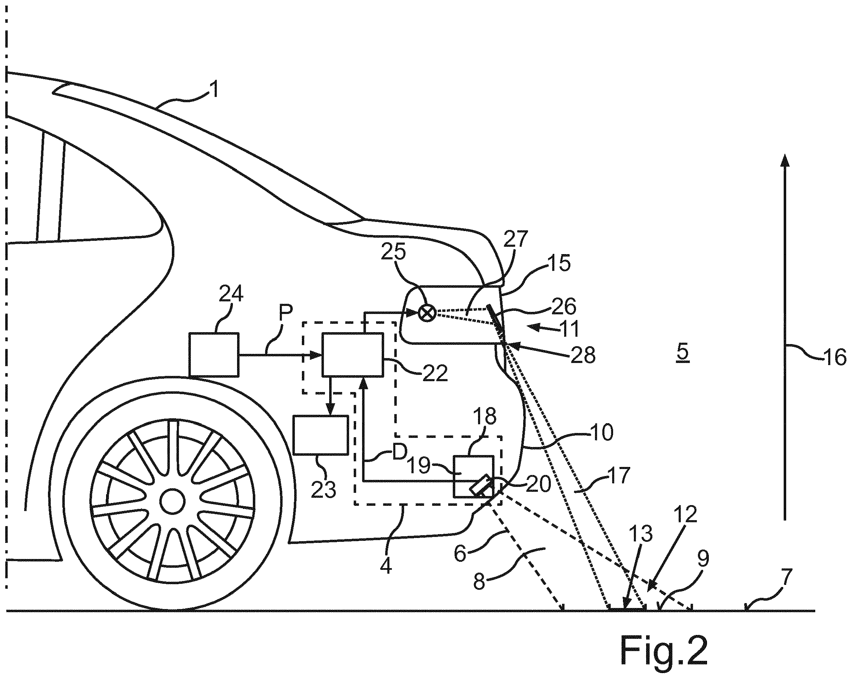

Zur Erläuterung dieses Vorteils ist der beschriebene berührungslose Klappenöffner im Folgenden anhand von Fig. 2 noch einmal genauer beschrieben.

Die Sensoreinrichtung 4 kann ein Gehäuse 18 aufweisen, das beispielsweise aus Kunststoff und/oder einem Material gebildet sein kann, dass einen Gehäuseinnenraum 19 gegen elektromagnetische Störstrahlung abschirmt. Im Gehäuse 18, das heißt im Gehäuseinnenraum 19, kann ein Sensorelement 20 oder es können mehrere Sensorelemente angeordnet sein. In dem gezeigten Beispiel ist nur ein Sensorelement 20 zum Bereitstellen des Erfassungsbereichs 6 vorgesehen.

Das Sensorgehäuse 18 ist an einem ersten Bauteil 10 des Kraftfahrzeugs 1 angeordnet. Bei dem ersten Bauteil 10 kann es sich beispielsweise um einen Stoßfänger handeln, beispielsweise den Stoßfänger am Heck 2. Hierdurch ergibt sich der Vorteil, dass die Sensoreinrichtung 4 einen Abstand zur Bodenfläche 7 aufweist, der kleiner als ein Meter, insbesondere kleiner als 17 cm, ist. Mit anderen Worten ist sichergestellt, dass der Fuß F zuverlässig von dem Sensorelement 20 detektiert wird. Ein zu großer Abstand zwischen dem Sensorelement 20 und dem Fuß F könnte die Detektion unzuverlässig machen.

Die Leuchteinrichtung 11 kann dagegen in einem anderen, zweiten Bauteil 15 angeordnet sein, das von dem Bauteil 10 verschieden ist. Insbesondere ist das Bauteil 15 entlang einer Fahrzeughochachse 16 oder z-Richtung höher als das Bauteil 10 angeordnet. Hierdurch ergibt sich die höhere Wahrscheinlichkeit, dass das Bauteil 15 einen geringeren Verschmutzungsgrad aufweist, als das Bauteil 10. So ist die Wahrscheinlichkeit verringert, dass ein Lichtaustritt eines zum Erzeugen der Leuchtmarkierung 12 abgegebenen oder ausgestrahlten Lichtstrahls 17 durch Schmutz obstruiert oder blockiert ist.

Das Bauteil 15 ist bevorzugt eine Fahrzeugleuchte des Kraftfahrzeugs 1, insbesondere eine Heckleuchte. Als Heckleuchte kann das Bauteil 15 beispielsweise ein Bremslicht und/oder ein Rückfahrlicht aufweisen.

Bei dem Sensorelement 20 kann es sich beispielsweise um einen Bewegungssensor auf Infrarotbasis, einen Ultraschallsensor, eine Kamera oder einen optischen Empfänger für eine Umgebungshelligkeit handeln. Auf der Grundlage eines jeweiligen Sensorsignals jedes Sensorelements, in dem Beispiel des Sensorelements 20, kann durch die Sensoreinrichtung 4 das Sensorsignal D erzeugen.

Die Sensoreinrichtung 4 kann mit einer Steuereinrichtung 22 gekoppelt sein, bei der es sich beispielsweise um ein Steuergerät des Kraftfahrzeugs 1 handeln kann. Die Steuereinrichtung 22 kann Bestandteil der Sensoreinrichtung 4 sein. Von der Sensoreinrichtung 4 muss lediglich das Gehäuse 18 mit dem Sensorelement 20 an dem Bauteil 10 angeordnet sein. Die Steuereinrichtung 22 kann das Sensorsignal D empfangen und in Abhängigkeit von dem Sensorsignal D eine Schließanlage 23 ansteuern, die beispielsweise dazu ausgelegt sein kann, eine motorisierte Heckklappe zu bewegen. Bei der Schließanlage 23 kann hierzu beispielsweise eine Steuerschaltung bereitgestellt sein.

Es kann auch ein Funkschlüsselempfänger 24 bereitgestellt sein, der eine Gegenwart eines Funkschlüssels in der Umgebung 5, beispielsweise in einem Bereich näher als 20 Meter, insbesondere näher als 10 Meter, zum Kraftfahrzeug 1 erkennt. Der Funkschlüsselempfänger 24 kann ebenfalls mit der Steuereinrichtung 22 gekoppelt sein und bei Erkennen eines Funkschlüssels in der Umgebung 5 ein Anwesenheits- oder Präsenzsignal P an die Steuereinrichtung 22 ausgehen. Es kann vorgesehen sein, dass die Steuereinrichtung 22 nur bei Vorliegen eines Präsenzsignals P ein Steuersignal für die Schließanlage 23 in Abhängigkeit von dem Sensorsignal D erzeugt. Insbesondere kann vorgesehen sein, dass nur bei vorliegendem Präsenzsignal P das Sensorelement 20 und die Leuchteinrichtung aktiviert werden, sodass die Leuchtmarkierung 13 nur bei vorliegendem Präsenzsignal P auf der Bodenfläche 7 erzeugt wird und durch die Sensoreinrichtung 4 ein Objekt im Erfassungsbereich 6 erkannt wird.

Um dem Benutzer den Teil 9 der Bodenfläche 7 und/oder die Raumlage des Volumens 8, das von dem Erfassungsbereich 6 erfasst ist, zu analysieren oder markieren oder kenntlich zu machen, kann beispielsweise durch die Steuereinrichtung 22 die Leuchteinrichtung 11 aktiviert werden. Die Leuchteinrichtung 11 kann in dem Bauteil 15 integriert sein, dass insbesondere eine Fahrzeugleuchte, bevorzugt eine Heckleuchte, ist.

Im Folgenden ist man davon ausgegangen, dass es sich bei dem Bauteil 15 um eine Heckleuchte handelt. In dem Bauteil 15 kann eine Lichtquelle 25 bereitgestellt sein, die beispielsweise eine Leuchtdiode und/oder einen Laser aufweisen kann. Die Lichtquelle 25 kann dazu ausgelegt sein, ein Funktionslicht der Heckleuchte zu erzeugen, beispielsweise ein Rücklicht, ein Bremslicht, ein Rückfahrlicht und/oder eine Nebelleuchte. Es kann sich auch um eine Lichtquelle 25 handeln, die ausschließlich zum Erzeugen der Leuchtmarkierung 13 vorgesehen sein kann.

In dem Bauteil 15 kann als Bestandteil der Leuchteinrichtung 11 ein optisches Element 26 bereitgestellt sein. Das optische Element 26 kann dazu ausgelegt sein, von der Lichtquelle 25 abgestrahltes Licht 27 zu dem Lichtstrahl 17 zu formen, welcher auf den Teil 9 der Bodenfläche 7 fällt und hierdurch die Leuchtmarkierung 12 erzeugt. Indem die Leuchteinrichtung 11 im Bauteil 15 integriert ist und nicht in dem Gehäuse 18 angeordnet sein muss, ergibt sich ein besonders kleinbauendes Sensorgehäuse für das Sensorelement 20. Des Weiteren ist hierdurch auch die Verschaltung in dem Gehäuse 18 und der Kühlflächenbedarf in vorteilhafter Weise reduziert. Es muss keine Verschaltung für die Lichtquelle 25 und das optische Element 26 und auch keine Kühlung für diese Bauelemente in dem Gehäuse 18 bereitgestellt sein.

In dem die Beleuchtungseinheit, das heißt die Leuchteinrichtung 11 zum Erzeugen des sichtbaren Aktivierungspunkts auf der Bodenfläche 7, in eine Heckleuchte integriert ist, kann in der Leuchteinrichtung 11 eine dedizierte Lichtquelle, das heißt beispielsweise eine Leuchtdiode und Treiberbausteine, eingespart werden. Hierdurch kann auch die Baugröße des Sensorgehäuses 18 verkleinert werden. Auch eine Kühlfläche und weitere thermische Anpassungen müssen im Sensorgehäuse 18 vorgesehen sein, damit sowohl das Sensorelement 20 als auch die Lichtquelle 25 in ein und demselben Gehäuse bereitgestellt sein können.

In der Heckleuchte können stattdessen als Lichtquelle 25 vorhandene Leuchtdioden und/oder Laser verwendet werden. Das optische Element 26 kann beispielsweise durch einen Lichtleiter und/oder Shutter (steuerbare Blende) und/oder eines oder mehreren Prismen oder beispielsweise einen Spiegel als optische Umlenkung dazu verwendet werden, den sichtbaren Aktivierungspunkt, das heißt die Leuchtmarkierung 12, auf der Bodenfläche 7 abzubilden. Hierzu kann das Licht 27 auch von mehreren Lichtquellen in der Heckleuchte über das optische Element 26 gebündelt werden, um so die Helligkeit, das heißt die Leuchtintensität, beispielsweise in Abhängigkeit von einem Umgebungslicht der Umgebung 5 heller oder dunkler einzustellen. Geeignete Steuersignale zum Steuern des optischen Elements 26, beispielsweise motorischen Verschwenken eines Spiegels, kann beispielsweise durch die Steuereinrichtung 22 erzeugt werden.

Bei dem Kraftfahrzeug 1 ist somit eine Sensoreinrichtung für einen berührungslosen Klappenöffner bereitgestellt, deren Lichtaustrittsbereich 28 für den Lichtstrahl 17 zum Erzeugen der Leuchtmarkierung 12 nicht leicht verschmutzt und die ein Sensorgehäuse für mindestens einen Empfänger, beispielsweise einen optischen Empfänger, eine Kamera oder einen Ultraschallempfänger aufweist, das kompakt baut. Hierdurch kann eine besonders aufwandsarme und damit kostengünstige Sensoreinrichtung bereitgestellt werden.

Erzielt werden diese Vorteile dadurch, dass die Leuchteinrichtung 11 in einer anderen Baugruppe des Kraftfahrzeugs 1 angeordnet ist, nämlich das Bauteil 5, als das Sensorgehäuse 18. Zudem braucht in dem Sensorgehäuse nur der Empfänger der Sensoreinrichtung untergebracht sein, das heißt das Sensorelement 20 oder eine Anordnung aus mehreren Sensorelementen. Insbesondere ist vorgesehen, dass die Leuchteinrichtung 11 höher angeordnet ist, als das Sensorgehäuse 18.

Vorzugsweise ist die Leuchteinrichtung 11 im Bereich der Rückleuchte eines Kraftfahrzeugs angeordnet. Weiter ist bevorzugt, dass die Leuchteinrichtung 11 in die Rückleuchte integriert ist. Hierbei können insbesondere in der Rückleuchte ohnehin vorhandene Komponenten, wie Lichtquellen und/oder eine Optik zum Bereitstellen eines Strahlengangs, für die Funktion des Markierens des überwachten Bereichs 8 und 9 mit verwendet werden. Insgesamt zeigt das Beispiel, wie durch die Erfindung eine Illumination für Heckklappenöffner aus Heckleuchten heraus ermöglicht wird.

Insgesamt ist durch das Beispiel gezeigt, wie durch die Erfindung eine Illumination für einen Heckklappenöffner aus einer Heckleuchte heraus bereitgestellt werden kann.

## Patentansprüche

1. Vorrichtung für ein Kraftfahrzeug (1) aufweisend:
- eine Sensoreinrichtung (4) mit einem Gehäuse (18), das an einem ersten Bauteil (10) des Kraftfahrzeugs (1) in einer vorbestimmten erste Einbaulage befestigbar ausgestaltet ist und in dem zumindest ein Sensorelement (20) angeordnet ist, das in der bestimmungsgemäßen ersten Einbaulage des Gehäuses (18) einen sich zu einer Bodenfläche (7) einer Umgebung (5) des Kraftfahrzeugs (1) hin erstreckenden Erfassungsbereich (6) aufweist und dazu ausgelegt ist, ein von einer Anwesenheit eines Körperteils (F) eines Benutzers, in dem Erfassungsbereich (6) abhängiges Sensorsignal (D) zu erzeugen;
- eine Leuchteinrichtung (11), die dazu ausgelegt ist, durch Abstrahlen von Licht (17) in einem von dem Erfassungsbereich (6) erfassten Teil (9) der Bodenfläche (7) eine Leuchtmarkierung (12) zu erzeugen;
**dadurch gekennzeichnet, dass** die
Leuchteinrichtung (11) außerhalb des Gehäuses (18) der Sensoreinrichtung (4) angeordnet ist und die Leuchtmarkierung (12) für den Benutzer bereitgestellt wird damit der Benutzer erkennt, wohin er seinen Körperteil (F) halten muss, beziehungsweise durch welchen Bereich er seinen Körperteil (F) hindurch schwenken muss.

2. Vorrichtung nach Anspruch 1,
**dadurch gekennzeichnet, dass** die Leuchteinrichtung (11) in einer zweiten Einbaulage in dem Kraftfahrzeug anordenbar ausgestaltet ist, wobei die zweite Einbaulage entlang einer Fahrzeughochachse (16) des Kraftfahrzeugs (1) höher angeordnet ist als die bestimmungsgemäße erste Einbaulage des Gehäuses (18).

3. Vorrichtung nach einem der vorhergehenden Ansprüche,
**dadurch gekennzeichnet, dass**
das Gehäuse (18) an einem Stoßfänger oder einem Trittbrett oder einer Heckklappe befestigbar ausgestaltet ist.

4. Vorrichtung nach einem der vorhergehenden Ansprüche,
**dadurch gekennzeichnet, dass** das zumindest eine Sensorelement (20) jeweils einen optischen Empfänger, eine Kamera oder einen Ultraschallsensor aufweist.

5. Vorrichtung nach einem der vorhergehenden Ansprüche,
**dadurch gekennzeichnet, dass**
die Leuchteinrichtung (11) mit einem Helligkeitssensor, der ein mit einer Umgebungshelligkeit korrelierendes Helligkeitssignal zu erzeugen ausgelegt ist, gekoppelt ist und die Leuchteinrichtung (11) dazu ausgelegt ist, in Abhängigkeit von dem Helligkeitssignal eine Strahlungsintensität des zum Erzeugen der Leuchtmarkierung (12) abgestrahlten Lichts (17) einzustellen.

6. Vorrichtung nach einem der vorhergehenden Ansprüche,
**dadurch gekennzeichnet, dass**
die Sensoreinrichtung (4) mit einer Schließanlage (23) des Kraftfahrzeugs (1) koppelbar ausgestaltet ist und die Sensoreinrichtung (4) dazu ausgelegt ist, in Abhängigkeit von dem jeweiligen Sensorsignal (D) des zumindest einen Sensorelements (20) durch Aussenden eines Steuersignals an die Schließanlage (23) eine Klappe (3) des Kraftfahrzeugs (1), insbesondere eine Heckklappe, zu entriegeln und/oder zu öffnen.

7. Vorrichtung nach einem der vorhergehenden Ansprüche,
**dadurch gekennzeichnet, dass**
die Leuchteinrichtung und die Sensoreinrichtung (4) mit einem Funkschlüsselempfänger (24) des Kraftfahrzeugs (1) koppelbar ausgestaltet sind und dazu ausgelegt sind, in Abhängigkeit von einem Funksignal eines Funkschlüssels die Sensoreinrichtung (4) und die Leichteinrichtung in einen Aktivzustand zu schalten.

8. Vorrichtung nach einem der vorhergehenden Ansprüche,
**dadurch gekennzeichnet, dass**
die Leuchteinrichtung (11) in oder an einer Fahrzeugleuchte, insbesondere einer Heckleuchte, des Kraftfahrzeugs (1) anordenbar ausgestaltet ist.

9. Vorrichtung nach Anspruch 8,
**dadurch gekennzeichnet, dass**
die Leuchteinrichtung (11) dazu ausgelegt ist, zum Erzeugen des Lichts (17) zumindest eine Leuchtdiode und/oder zumindest einen Laser der Fahrzeugleuchte zu aktivieren.

10. Vorrichtung nach Anspruch 8 oder 9,
**dadurch gekennzeichnet, dass**
die Leuchteinrichtung (1) ein optisches Element (26) zum optischen Bündeln und/oder zum optischen Umlenken des Lichts (17) vor einem Eintritt in die Umgebung (5) aufweist.

11. Vorrichtung nach Anspruch 10,
**dadurch gekennzeichnet, dass**
das optische Element (26) zum Abzweigen des Lichts (17) aus einem Strahlengang der Fahrzeugleuchte ausgelegt ist.

12. Vorrichtung nach einem der Ansprüche 10 oder 11,
**dadurch gekennzeichnet, dass**
das optische Element (26) zwischen einem Umlenkzustand, in welchem das optische Element (26) das Licht (17) zum Erzeugen der Leuchtmarkierung (12) von einer Lichtquelle (25) der Fahrzeugleuchte empfängt und in den Teil (9) der Bodenfläche (7) zum Erzeugen der Leuchtmarkierung (12) umlenkt, und einem Neutralzustand, in welchem das optische Element (26) das Licht (17) der Lichtquelle (25) passieren lässt, umschaltbar ausgestaltet ist.

13. Vorrichtung nach einem der Ansprüche 10 bis 12,
**dadurch gekennzeichnet, dass**
das optische Element (26) einen Lichtleiter und/oder eine Blende und/oder ein Prisma und/oder einen bewegbar gelagerten Spiegel aufweist.

14. Kraftfahrzeug mit einer Vorrichtung nach einem der Ansprüche 1 bis 13.

## Claims

1. Apparatus for a motor vehicle (1), having:
- a sensor device (4) having a housing (18), which is configured to be mountable to a first component (10) of the motor vehicle (1) in a predetermined first installation position and in which at least one sensor element (20) is arranged, which, in the intended first installation position of the housing (18), has a capturing region (6) extending to a ground area (7) in an environment (5) of the motor vehicle (1) and is designed to produce a sensor signal (D), which is dependent on the presence of a body part (F) of a user in the capturing region (6);
- a light-emitting device (11), which is designed to produce a light mark (12) by emitting light (17) in a part (9) of the ground area (7) that is captured by the capturing region (6);
**characterized in that**
the light-emitting device (11) is arranged outside the housing (18) of the sensor device (4) and the light mark (12) is provided for the user so that the user can see where they must hold their body part (F), or through which region they must move their body part (F).

2. Apparatus according to Claim 1, **characterized in that** the light-emitting device (11) is configured to be arrangeable in a second installation position in the motor vehicle, wherein the second installation position is arranged higher along a vertical vehicle axis (16) of the motor vehicle (1) than the intended first installation position of the housing (18).

3. Apparatus according to either of the preceding claims, **characterized in that** the housing (18) is configured to be attachable to a bumper or a step or a tailgate.

4. Apparatus according to one of the preceding claims, **characterized in that** the at least one sensor element (20) has in each case one optical receiver, one camera or one ultrasonic sensor.

5. Apparatus according to one of the preceding claims, **characterized in that** the light-emitting device (11) is coupled to a brightness sensor, which is designed to produce a brightness signal correlating to an ambient brightness, and the light-emitting device (11) is configured to set a radiation intensity of the light (17) emitted for producing the light mark (12) in dependence on the brightness signal.

6. Apparatus according to one of the preceding claims, **characterized in that** the sensor device (4) is designed to be able to be coupled to a closure system (23) of the motor vehicle (1) and the sensor device (4) is designed to unlock and/or open a lid (3) of the motor vehicle (1), in particular a tailgate, by emitting a control signal to the closure system (23) in dependence on the respective sensor signal (D) of the at least one sensor element (20).

7. Apparatus according to one of the preceding claims, **characterized in that** the light-emitting device and the sensor device (4) are configured to be able to be coupled to a radio key receiver (24) of the motor vehicle (1) and are designed to switch the sensor device (4) and the light-emitting device into an active state in dependence on a radio signal of a radio key.

8. Apparatus according to one of the preceding claims, **characterized in that** the light-emitting device (11) is configured to be arrangeable in or on a vehicle lamp, in particular a rear lamp, of the motor vehicle (1).

9. Apparatus according to Claim 8, **characterized in that** the light-emitting device (11) is designed to activate at least one light-emitting diode and/or at least one laser of the vehicle lamp for generating the light (17).

10. Apparatus according to Claim 8 or 9, **characterized in that** the light-emitting device (1) has an optical element (26) for optically focusing and/or for optically deflecting the light (17) before it enters the environment (5).

11. Apparatus according to Claim 10, **characterized in that** the optical element (26) is designed for branching off the light (17) from a beam path of the vehicle lamp.

12. Apparatus according to either of Claims 10 and 11, **characterized in that** the optical element (26) is configured to be switchable between a deflection state, in which the optical element (26) receives the light (17) for producing the light mark (12) from a light source (25) of the vehicle lamp and deflects it into the part (9) of the ground area (7) for producing the light mark (12), and a neutral state, in which the optical element (26) allows the light (17) of the light source (25) to pass.

13. Apparatus according to one of Claims 10 to 12, **characterized in that** the optical element (26) has a light guide and/or a stop and/or a prism and/or a movably mounted mirror.

14. Motor vehicle having an apparatus according to one of Claims 1 to 13.

## Revendications

1. Arrangement pour un véhicule automobile (1), comprenant :
- un dispositif de détection (4) comprenant un boîtier (18), qui est configuré pour pouvoir être fixé à un premier élément structural (10) du véhicule automobile (1) dans une première position de montage prédéterminée et dans lequel est disposé au moins un élément capteur (20) qui, dans la première position de montage conforme à l'usage du boîtier (18), présente une zone de détection (6) qui s'étend vers une surface de sol (7) d'un environnement (5) du véhicule automobile (1) et est conçu pour générer un signal de capteur (D) dépendant d'une présence d'une partie de corps (F) d'un utilisateur dans la zone de détection (6) ;
- un dispositif lumineux (11) qui est conçu pour, par irradiation de lumière (17), générer un marquage lumineux (12) dans une partie (9) de la surface de sol (7) détectée par la zone de détection (6) ;
**caractérisé en ce que**
le dispositif lumineux (11) est disposé en-dehors du boîtier (18) du dispositif de détection (4) et le marquage lumineux (12) est mis à disposition de l'utilisateur afin que l'utilisateur reconnaisse l'endroit où il doit tenir sa partie de corps (F) ou la zone à travers laquelle il doit pivoter sa partie de corps (F).

2. Arrangement selon la revendication 1, **caractérisé en ce que** le dispositif lumineux (11) est configuré pour pouvoir être disposé dans le véhicule automobile dans une deuxième position de montage, la deuxième position de montage étant placée plus haut le long d'un axe de hauteur de véhicule (16) du véhicule automobile (1) que la première position de montage du boîtier (18) conforme à l'usage.

3. Arrangement selon l'une des revendications précédentes, **caractérisé en ce que** le boîtier (18) est configuré pour pouvoir être fixé à un pare-chocs ou à un marchepied ou à un hayon.

4. Arrangement selon l'une des revendications précédentes, **caractérisé en ce que** l'au moins un élément capteur (20) possède respectivement un récepteur optique, une caméra ou un capteur à ultrasons.

5. Arrangement selon l'une des revendications précédentes, **caractérisé en ce que** le dispositif lumineux (11) est couplé à un capteur de luminosité, qui est conçu pour générer un signal de luminosité corrélé avec une luminosité ambiante, et le dispositif lumineux (11) est conçu pour régler une intensité de rayonnement de la lumière (17) irradiée pour générer le marquage lumineux (12) en fonction du signal de luminosité.

6. Arrangement selon l'une des revendications précédentes, **caractérisé en ce que** le dispositif de détection (4) est configuré pour pouvoir être connecté à un équipement de fermeture (23) du véhicule automobile (1) et le dispositif de détection (4) est conçu pour déverrouiller et/ou pour ouvrir un capot (3) du véhicule automobile (1), notamment un hayon, en fonction du signal de capteur (D) respectif de l'au moins un élément capteur (20) en envoyant un signal de commande à l'équipement de fermeture (23) .

7. Arrangement selon l'une des revendications précédentes, **caractérisé en ce que** le dispositif lumineux et le dispositif de détection (4) sont configurés pour pouvoir être connectés à un récepteur de clé radioélectrique (24) du véhicule automobile (1) et sont conçus pour commuter le dispositif de détection (4) et le dispositif lumineux dans un état actif en fonction d'un signal radioélectrique d'une clé radioélectrique.

8. Arrangement selon l'une des revendications précédentes, **caractérisé en ce que** le dispositif lumineux (11) est configuré pour pouvoir être disposé dans ou sur un feu de véhicule, notamment un feu arrière, du véhicule automobile (1) .

9. Arrangement selon la revendication 8, **caractérisé en ce que** le dispositif lumineux (11) est conçu pour, en vue de générer la lumière (17), activer au moins une diode électroluminescente et/ou au moins un laser du feu de véhicule.

10. Arrangement selon la revendication 8 ou 9, **caractérisé en ce que** le dispositif lumineux (1) possède un élément optique (26) destiné à concentrer optiquement et/ou à dévier optiquement la lumière (17) avant une entrée dans l'environnement (5).

11. Arrangement selon la revendication 10, **caractérisé en ce que** l'élément optique (26) est conçu pour dériver la lumière (17) hors d'un trajet de rayon du feu de véhicule.

12. Arrangement selon l'une des revendications 10 et 11, **caractérisé en ce que** l'élément optique (26) est configuré pour pouvoir être permuté entre un état de déviation, dans lequel l'élément optique (26) reçoit la lumière (17) destinée à générer le marquage lumineux (12) d'une source de lumière (25) du feu de véhicule et la dévie dans la partie (9) de la surface de sol (7) en vue de générer le marquage lumineux (12), et un état neutre, dans lequel l'élément optique (26) laisse passer la lumière (17) de la source de lumière (25).

13. Arrangement selon l'une des revendications 10 à 12, **caractérisé en ce que** l'élément optique (26) possède un conducteur optique et/ou un diaphragme et/ou un prisme et/ou un miroir monté mobile.

14. Véhicule automobile comprenant un arrangement selon l'une des revendications 1 à 13.
